# EUROPÄISCHE PATENTSCHRIFT

(11) **EP 3 898 368 B1**
(45) Veröffentlichungstag und Bekanntmachung des Hinweises auf die Patenterteilung: **04.10.2023**
(21) Anmeldenummer: 19816216.6
(22) Anmeldetag: 25.11.2019
(51) Int. Cl.: B60W 50/02, G01C 21/30, G01C 21/14, G01S 19/39, B60W 50/00

(54) **VERFAHREN UND SYSTEM ZUM BESTIMMEN EINER KORRIGIERTEN TRAJEKTORIE EINES FAHRZEUGS**
METHOD AND SYSTEM FOR DETERMINING A CORRECTED TRAJECTORY OF A VEHICLE
PROCÉDÉ ET SYSTÈME SERVANT À DÉTERMINER UNE TRAJECTOIRE CORRIGÉE D'UN VÉHICULE

(30) Priorität: 17.12.2018 DE 102018221864
(43) Veröffentlichungstag der Anmeldung: 27.10.2021
(73) Patentinhaber: VOLKSWAGEN AKTIENGESELLSCHAFT, 38440 Wolfsburg (DE)
(72) Erfinder: SCHACK, Moritz, 38126 Braunschweig (DE); MERFELS, Christian, 38102 Braunschweig (DE)
(86) Internationale Anmeldenummer: PCT/EP2019/082485
(87) Internationale Veröffentlichungsnummer: WO 2020/126338

(56) Entgegenhaltungen:
- DE-A1-102008 023 242
- DE-A1-102017 005 020
- Yinlou ET AL: "Map-MatchingforLow-Sampling-RateGPSTrajec tories", , 4. November 2009 (2009-11-04), XP055667613, Gefunden im Internet: URL:https://dl.acm.org/doi/pdf/10.1145/165 3771.1653820?download=true [gefunden am 2020-02-12]

## Beschreibung

Die vorliegende Erfindung betrifft ein Verfahren zum Bestimmen einer Trajektorie eines Fahrzeugs. Dabei werden Kartendaten über einen Verkehrsweg bereitgestellt, auf dem sich das Fahrzeug bewegt, wobei die Kartendaten eine Vorzugslinie zum Befahren des Verkehrswegs umfassen. Ein Trajektorienabschnitt des Fahrzeugs wird erfasst. Die Erfindung betrifft ferner ein Positionsbestimmungssystem zum Bestimmen einer Trajektorie eines Fahrzeugs. Das System umfasst eine Kartendaten-Bereitstellungseinheit zum Bereitstellen von Kartendaten über einen Verkehrsweg, auf dem sich das Fahrzeug bewegt, wobei die Kartendaten eine Vorzugslinie zum Befahren des Verkehrswegs umfassen. Es umfasst ferner eine Positionsbestimmungseinheit zum Erfassen eines Trajektorienabschnitts des Fahrzeugs und eine mit der Positionsbestimmungseinheit und der Kartendaten-Bereitstellungseinheit gekoppelte Recheneinheit.

Moderne Fahrzeuge umfassen oft eine Vielzahl von Fahrerassistenzsystemen, welche die Steuerung des Fahrzeugs unterstützen und in unterschiedlichem Grad eine Automatisierung von Fahrfunktionen erlauben. Dies kann bis zu einer vollständig autonomen Steuerung des Fahrzeugs reichen. Für viele Fahrerassistenzfunktionen wird eine hochgenaue Kenntnis über die globale Fahrzeugposition benötigt. Oftmals ist auch die relative Position zu einer digitalen Karte mit Fahrstreifeninformationen von besonderem Interesse, etwa für die Bestimmung der relativen Lage des Fahrzeugs zu der Fahrstreifenmitte. Es hat sich gezeigt, dass sehr häufig die erfasste Position bezüglich eines hochgenauen kartenbasierten Referenzsystems verschoben ist.

Die Gründe dafür sind abhängig von dem verwendeten Ortungssystem. Die Positionsgüte der Schätzungen von Empfängern für globale Navigationssatellitensysteme (GNSS) leiden zum Beispiel unter Mehrwegeeffekten, Satellitensignalstörungen an der Ionosphäre beziehungsweise Troposphäre oder an Uhrenfehlern. Kartenbasierte Ortungssysteme können etwa einen Versatz aufgrund nicht ausreichender Kalibrierung der verwendeten Sensorik (etwa Lidar, Kameras, Radar) oder auf Grund von mangelhaftem Kartenmaterial aufweisen.

Die Positionsschätzungen von Ortungssystemen weisen daher häufig einen Versatz auf, der über eine gewisse Zeitspanne mehr oder weniger konstant ist. Die Zeitspanne ist abhängig vom konkreten Ortungssystem und seinen Umgebungsbedingungen. Beispielsweise handelt es sich für das globale Positionsbestimmungssystem GPS (*global positioning system*) um eine Größenordnung von 30 bis 90 Sekunden, die Zeit kann jedoch in Innenstädten mit starker Bebauung und daraus folgendem schlechten Signalempfang auch länger andauernd sein. Ein Grund hierfür ist beispielsweise, dass in einem solchen Zeitraum nur eine bestimmte Anzahl Navigationssatelliten erreichbar sind.

Zur Behebung oder Umgehung dieser Schwierigkeiten können hochgenaue GPS-Systeme mit einer Genauigkeit im Zentimeterbereich verwendet werden, etwa ein RTK-GPS-System oder Systems mit terrestrischen Korrekturdaten. Derartige Systeme können jedoch zu erheblichen Kosten führen und mit hohem Rechenaufwand verbunden sein. Ähnliche Referenzsysteme gibt es auch auf der Basis von bildgebender Sensorik.

In der US 2017/0247032 A1 wird ein Verfahren beschrieben, bei dem für ein Fahrzeug mit einem Anhänger ein korrigierter Pfad bestimmt wird, um dem Verlauf einer Kurve zu folgen.

In der DE 10 2015 214 338 A1 wird ein Verfahren beschrieben, bei dem eine Anordnungsinformation für ein Fahrzeug bestimmt wird. Dazu erfassen Sensoren die Fahrstreifenanordnung in der Umgebung des Fahrzeugs und vergleicht diese mit kartenbasierten Fahrstreifen. Anhand dieser Daten wird bestimmt, auf welchem Fahrstreifen sich das Fahrzeug befindet.

Die DE 10 2016 213 782 A1 und die DE 10 2016 213 783 A1 schlagen Verfahren zur Bestimmung der lateralen Position eines Fahrzeugs relativ zu den Fahrstreifen einer Fahrbahn vor. Dabei erfasst eine Bilderfassungseinheit Fahrbahnmarkierungen und es wird ferner bestimmt, ob diese Daten zum Ermitteln der lateralen Position ausreichen.

In der DE 10 2017 006 142 A1 wird ein Verfahren zur Lokalisierung eines Fahrzeugs innerhalb eines Fahrstreifens beschrieben, bei dem mittels eines Partikelfilters und eines Odometriemodells die wahrscheinlichstes Position geschätzt wird. Es kann ferner anhand einer Karte mit Centerlinien eine Karte mit Polygonen erzeugt und zur Bestimmung der Aufenthaltswahrscheinlichkeit genutzt werden.

Die DE 10 2010 005 293 A1 beschreibt ein Verfahren zur Spurpfadschätzung unter Verwendung einer Sensorvereinigung. Mehrere Sensoren des Fahrzeugs werden überwacht und es werden Partikelpunkte erzeugt, die einen potentiellen Pfad des Fahrzeugs darstellen. In einem iterativen Verfahren werden die Partikelpunkte zur Navigation verwendet und verworfen, nachdem das Fahrzeug sie passiert hat.

Des Weiteren sind aus der DE10 2017 005 020 A1, der DE 10 2008 023 242 A1 sowie der Veröffentlichung YIN LOU et. al. "Map-Matching for Low-Sampling-Rate GPS Trajectories", 4 November 2009 (XP055667613) sogenannte Map-Matching-Verfahren bekannt.

Der vorliegenden Erfindung liegt die Aufgabe zugrunde, ein Verfahren und ein System der eingangs genannten Art bereitzustellen, die eine besonders genaue Bestimmung der von dem Fahrzeug befahrenen Trajektorie mit einfachen Mitteln erlauben.

Erfindungsgemäß wird diese Aufgabe durch ein Verfahren mit den Merkmalen des Anspruchs 1 und ein System mit den Merkmalen des Anspruchs 11 gelöst. Vorteilhafte Ausgestaltungen und Weiterbildungen ergeben sich aus den abhängigen Ansprüchen.

Bei dem erfindungsgemäßen Verfahren der eingangs genannten Art wird anhand eines Vergleichs des erfassten Trajektorienabschnitts und der Vorzugslinie ein Ortungsversatz bestimmt. Anhand des Ortungsversatzes und des erfassten Trajektorienabschnitts wird ein korrigierter Trajektorienabschnitt bestimmt wird, wobei der Ortungsversatz so bestimmt wird, dass eine Abweichung zwischen der Vorzugslinie und dem korrigierten Trajektorienabschnitt optimiert wird.

Dadurch kann eine fehlerhafte Positionsbestimmung vorteilhafterweise besonders einfach und ohne aufwendige zusätzliche Sensoren und Einrichtungen korrigiert werden. Das Verfahren geht dabei von der Annahme aus, dass sich das Fahrzeug im Wesentlichen tatsächlich entlang der Vorzuglinie bewegt. Es wird ein Trajektorienabschnitt als Ganzes betrachtet, sodass temporäre Abweichungen von der Vorzugslinie durch Mittelung über einen längeren Zeitraum beziehungsweise eine längere Strecke ausgeglichen werden können.

Es wird daher, anders als bei bekannten Verfahren, ein ganzer Abschnitt der von dem Fahrzeug gefahrenen Trajektorie berücksichtigt, statt lediglich für eine einzelne Position eine Korrektur zwischen erfasster und tatsächlicher Position durchzuführen. Zudem kann bei der Erfindung auch der Verlauf des Trajektorienabschnitts genutzt werden, etwa bei einer nicht geradlinigen Bewegung, um den Ortungsversatz besonders genau zu bestimmen.

Die Kartendaten werden bei dem Verfahren auf an sich bekannte Weise bereitgestellt, beispielsweise durch ein Navigationssystem oder eine Speichereinheit des Fahrzeugs. Sie können ferner von einer externen Einheit bereitgestellt werden, etwa einem externen Server, von dem die benötigten Kartendaten für einen bestimmten geografischen Bereich abgerufen werden, wenn sich das Fahrzeug an diesen Bereich annähert oder sich innerhalb des Bereichs bewegt, oder wenn eine geplante Fahrt des Fahrzeugs durch diesen Bereich verläuft.

Die Kartendaten umfassen insbesondere Informationen über eine geographische Einordnung des Verkehrswegs sowie über Fahrstreifen, die auf dem Verkehrsweg ausgebildet sind. Die Kartendaten umfassen dabei eine geometrische Beschreibung des Verkehrswegs, insbesondere mit Informationen über eine Vorzugslinie.

Die Vorzugslinie im Sinne der Erfindung bezeichnet eine Linie entlang der Längserstreckung des Verkehrsweges. Sie beschreibt etwa eine Trajektorie, entlang derer sich das Fahrzeug auf dem Verkehrsweg bewegen kann. Insbesondere handelt es sich um Fahrstreifenmitteninformationen beziehungsweise eine Mittellinie oder *"center line",* die bereits typischerweise von verwendeten hochgenauen Karten umfasst ist. Die Vorzugslinie kann sich dabei zum Beispiel in der geometrischen Mitte eines Fahrstreifens entlang dessen Längsverlauf erstrecken. Es kann sich ferner um eine theoretische Trajektorie eines Fahrzeugs beim Befahren des Verkehrswegs handeln, etwa eine Ideallinie zum optimalen Befahren des Verkehrswegs.

Die Vorzuglinie kann dabei bereits von den Kartendaten umfasst sein, die beispielsweise von einem Navigationssystem bereitgestellt werden. Alternativ oder zusätzlich kann eine Vorverarbeitung der bereitgestellten Kartendaten vorgesehen sein, bei der die Vorzugslinie erzeugt wird, beispielsweise durch eine Vorverarbeitungseinheit des Fahrzeugs. Die Vorzugslinie kann ferner als geplante Trajektorie des Fahrzeugs ausgebildet sein, insbesondere für eine autonome Steuerung des Fahrzeugs.

Der Trajektorienabschnitt des Fahrzeugs wird auf an sich bekannte Weise erfasst, beispielsweise mittels eines globalen Navigationssatellitensystems, etwa GPS. Der Trajektorienabschnitt kann ferner anhand anderer Lokalisierungsverfahren erfasst werden, etwa durch eine landmarkenbasierte Lokalisierung. Der Trajektorienabschnitt kann ferner als eine geplante Trajektorie des Fahrzeugs erfasst werden, etwa von einer Navigationseinheit oder einer Einheit zum Planen einer autonomen Steuerung des Fahrzeugs. Die Erfassung des Trajektorienabschnitts kann in globalen oder relativen Koordinatensystemen erfolgen.

Der bestimmte Ortungsversatz entspricht insbesondere einem Bias-Vektor, der einen Vektor von einer gemessenen Position zu einer tatsächlichen Position bezeichnet. Die Positionen können dabei in einem globalen Koordinatensystem bestimmt oder in einem lokalen Koordinatensystem relativ zu einem bestimmten Bezugspunkt angegeben werden, typischerweise abhängig von dem verwendeten Verfahren zur Bestimmung der Position. Durch den Ortungsversatz kann der erfasste Trajektorienabschnitt so korrigiert werden, dass er möglichst gut mit der Vorzugslinie übereinstimmt und daher die tatsächlich gefahrene Trajektorie möglichst gut angenähert. Dabei wird ein Optimierungsproblem gelöst, wobei insbesondere die Abweichung zwischen der Vorzugslinie und dem anhand des Ortungsversatzes korrigierten Trajektorienabschnitt minimiert wird. Zur Lösung dieses Optimierungsproblems können an sich bekannte statistische Verfahren verwendet werden.

Der bei dem Verfahren bestimmte Ortungsversatz kann ausgegeben werden, beispielsweise durch Übertragung an ein Fahrerassistenzsystem oder eine andere Einrichtung. Der mit dem Ortungsversatz ermittelte konstante *Bias* der Positionsmessung gegenüber den Kartendaten kann nun zur Korrektur des erfassten Trajektorienabschnitts des Fahrzeugs verwendet werden. Hierdurch kann erreicht werden, dass die erfasste Trajektorie im Wesentlichen, beziehungsweise im Mittel über ein bestimmtes Zeit- oder Längenintervall, auf der Vorzugslinie liegt. Eine solche Trajektorie wird als plausible Trajektorie angenommen und kann nachfolgend verwendet werden.

Bei dem Verfahren kann der Ortungsversatz im Fahrzeugkoordinatensystem oder einem anderen relativen Koordinatensystem und/oder in einem globalen Koordinatensystem bestimmt werden. Falls Informationen über einen zu erwartenden Lokalisierungsfehler vorliegen, etwa über seine Art oder Ausprägung, kann das System für das Verfahren beschränkt werden, beispielsweise um lediglich einen Ortungsversatz in einem globalen Koordinatensystem zu bestimmen. Dies kann beispielsweise bei Empfängern für einen globales Navigationssatellitensystem sinnvoll sein. Für kartenbasierte Lokalisierungssysteme kann beispielsweise ein relativer Lokalisierungsfehler in einem lokalen Koordinatensystem bestimmt werden.

Bei einer Ausbildung des erfindungsgemäßen Verfahrens umfasst der erfasste Trajektorienabschnitt eine Vielzahl zeitlich aufeinanderfolgender Positionsmessungen, insbesondere in einem globalen Koordinatensystem. Dadurch wird vorteilhafterweise die Bewegung des Fahrzeugs durch diskrete Positionsmessungen beschrieben. Die Vielzahl der Messungen erlaubt eine zuverlässige statistische Auswertung der Daten, um den Verlauf der Fahrt des Fahrzeugs trotz eventueller Schwankungen genau zu bestimmen.

Bei dem Verfahren wird der erfasste Trajektorienabschnitt mit der Vorzugslinie verglichen, um den Ortungsversatz zur Korrektur der Positionsmessung für den Trajektorienabschnitts zu bestimmen. Dabei geht das Verfahren insbesondere davon aus, dass sich ein Fahrzeug bei einer Fahrt entlang eines Trajektorienabschnitts im Mittel immer nahe an der Vorzugslinie bewegt. Kleinere Abweichungen nach links oder rechts gleichen sich bei einer Mittelung oder einer anderen statistischen Auswertung über ein zeitliches oder räumliches Intervall aus. Um von dieser Annahme ausgehen zu können, müssen ausreichende Daten über die Trajektorie für eine statistische Auswertung zur Verfügung stehen.

Bei einer weiteren Ausbildung weist der erfasste Trajektorienabschnitt Positionsmessungen während eines bestimmten Zeitintervalls, über einen bestimmten Fahrweg und/oder eine bestimmte Fahrweglänge auf. Die erfasste Vorzugslinie weist daher vorteilhafter Weise eine bestimmte räumliche oder zeitliche Länge auf, die etwa durch eine bestimmte Anzahl von Messungen, die Erfassung über einen bestimmten Zeitraum oder entlang einer bestimmten Weglänge definiert wird.

Dadurch stehen über eine angemessene Länge des Fahrwegs beziehungsweise über eine angemessene Länge eines Zeitintervalls erfasste Daten zur Verfügung, die mit der Vorzugslinie verglichen werden. Zum Beispiel kann angenommen werden, dass bei einer Mittelung über zumindest 20 Sekunden, bevorzugt zumindest 30 Sekunden, die Abweichungen bereits wesentlich reduziert werden. Bei einem weiteren Beispiel können Messungen über eine bestimmte Länge des Trajektorienabschnitts berücksichtigt werden, beispielsweise über zumindest 150 m, bevorzugt zumindest 250 m. Die Länge des Trajektorienabschnitts kann ferner durch eine Kombination von räumlicher und zeitlicher Länge bestimmt werden, wenn beispielsweise eine Erfassung über einen bestimmten Zeitraum und gleichzeitig eine minimale räumliche Länge für eine verwertbare Erfassung vorausgesetzt wird.

Bei einer Weiterbildung wird der Trajektorienabschnitt mittels eines Schiebefensteralgorithmus, insbesondere eines sogenannten *"Sliding Window",* erfasst. Dadurch wird vorteilhafterweise der jeweils zuletzt befahrene Trajektorienabschnitt berücksichtigt, um den Ortungsversatz zu bestimmen.

Bei dem Schiebefensteralgorithmus kann zum Beispiel vorgesehen sein, dass der Ortungsversatz für einen bestimmten Zeitpunkt oder eine bestimmte Position bestimmt wird, wobei der erfasste Trajektorienabschnitt lediglich Daten umfasst, die innerhalb eines bestimmten Zeitraums oder Längenbereichs davor erfasst wurden. Auf diese Weise "verschiebt" sich der erfasste Trajektorienabschnitt ständig, während sich das Fahrzeug bewegt beziehungsweise während die Zeit vergeht. Zum Beispiel wird eine zeitliche oder räumliche Länge für die Erfassung des Trajektorienabschnitts definiert. Bei der Durchführung des Verfahrens werden außerhalb dieses Fensters liegende Daten nicht berücksichtigt, sodass zum Beispiel eine Abweichung von der Vorzugslinie nur über einen begrenzten Zeitraum hinweg die Berechnung beeinflusst. Umgekehrt wird die Breite des Fensters so gewählt, dass eine ausreichende Datenbasis zur statistischen Auswertung zur Verfügung steht.

Die Breite des Schiebefensters, innerhalb dessen der Trajektorienabschnitt erfasst wird, entspricht insbesondere der zeitlichen oder örtlichen Länge des erfassten Trajektorienabschnitts. Sie kann festgelegt sein oder dynamisch bestimmt werden. Zum Beispiel können unterschiedliche Breiten je nach Fahrsituationen oder Geschwindigkeit des Fahrzeugs gewählt werden.

Bei einer Ausbildung des Verfahrens wird beim Vergleichen des Trajektorienabschnitts und der Vorzugslinie der erfasste Trajektorienabschnitt geglättet. Dadurch werden zum Beispiel statistische Schwankungen der Trajektorie nicht mehr berücksichtigt. Alternativ oder zusätzlich kann eine Vielzahl von Abweichungen des erfassten Trajektorienabschnitts von dem Vorzugslinienabschnitt bestimmt und gemittelt werden. Dabei können weitere statistische Verfahren alternativ oder zusätzlich verwendet werden, beispielsweise mit einer Gewichtung, bei der Abweichungen von der Vorzugslinie je nach ihrer Amplitude stärker oder schwächer berücksichtigt werden.

Bei einer Ausbildung der Erfindung wird beim Vergleichen des erfassten Trajektorienabschnitts und der Vorzugslinie ein Vorzugslinienabschnitt bestimmt, welcher einem von dem Fahrzeug befahrenen Abschnitt des Verkehrswegs entspricht. Dadurch wird der erfasste Trajektorienabschnitt vorteilhafterweise mit dem passenden Abschnitt der Vorzugslinie verglichen.

Der Vorzugslinienabschnitt wird auf an sich bekannte Weise bestimmt. Beispielsweise kann davon ausgegangen werden, dass sich das Fahrzeug auf der nächstgelegenen Position einer Vorzugslinie befindet. Der Vorzugslinienabschnitt kann ferner anhand einer geplanten Route für das Fahrzeug bestimmt werden, soweit davon ausgegangen werden kann, dass sich das Fahrzeug tatsächlich entlang dieser Route bewegt.

Bei einer weiteren Ausbildung wird beim Bestimmen des Vorzugslinienabschnitts bestimmt, auf welchem Fahrstreifen des Verkehrswegs sich das Fahrzeug befindet. Dadurch kann vorteilhafterweise besonders genau bestimmt werden, mit welcher Vorzugslinie der Kartendaten der erfasste Trajektorienabschnitt verglichen werden soll.

Der aktuelle Fahrstreifen kann auf an sich bekannte Weise ermittelt werden, beispielsweise anhand von Videodaten einer Kamera, mittels eines anderen Detektors wie Lidar, Radar oder anhand von Informationen eines Navigationssystems, das den zu verwendenden Fahrstreifen vorgibt. Alternativ oder zusätzlich kann ein Odometrieverfahren durchgeführt werden oder es können Signale betreffend die Wahl des Fahrstreifens, etwa die Betätigung eines Fahrtrichtungsanzeigers, ausgewertet werden.

Bei einer Weiterbildung wird beim Erfassen des Trajektorienabschnitts eine laterale Position des Fahrzeugs relativ zu dem Verkehrsweg erfasst. Dabei wird insbesondere die sogenannte "Querablage" des Fahrzeugs bestimmt. Dadurch kann vorteilhafterweise besonders genau überprüft werden, ob der erfasste Trajektorienabschnitt tatsächlich entlang der Vorzugslinie verläuft sowie ob und in welchem Maße die tatsächlich gefahrene Trajektorie von der Vorzugslinie abweicht. Dies erlaubt eine Verfeinerung der Messung, indem der gemessene Trajektorienabschnitt mit der tatsächlich gefahrenen Trajektorie auf dem Verkehrsweg verglichen wird.

Auch hier können an sich bekannte Verfahren verwendet werden, etwa mittels einer Kamera, eines Radar- oder Lidar-Scanners, lokaler Einrichtungen zur Positionsbestimmung oder anderer Sensoren.

Die Annahme, dass sich ein Fahrzeug im Wesentlichen entlang eines Trajektorienabschnitts bewegt, kann in bestimmten Situationen vorhersehbar verletzt werden, etwa wenn das Fahrzeug einen Fahrstreifenwechsel durchführt, eine Kurve schneidet oder in einem Kreisverkehr fährt. Da die Dauer solcher Ereignisse jedoch typischerweise recht kurz ist, beeinflussen sie den Mittelwert oft nur unwesentlich. Es können jedoch auch Maßnahmen vorgesehen sein, um eine Verfälschung der gemessenen Werte zu vermeiden, beispielsweise indem in entsprechenden Situationen keine Daten für den Trajektorienabschnitt erfasst werden oder indem Abschnitte der Fahrt, bei denen problematische Situationen auftreten, bei dem Vergleich mit der Vorzugslinie nicht berücksichtigt werden.

Bei dem erfindungsgemäßen Verfahren wird beim Erfassen des Trajektorienabschnitts ein verwertbarer Bereich des Trajektorienabschnitts bestimmt, anhand dessen der Vergleich mit der Vorzugslinie ausgeführt wird. Der erfasste Trajektorienabschnitt kann dadurch vorteilhafterweise auf einen Bereich beschränkt werden, wo die dem Verfahren zugrunde liegenden Annahmen als erfüllt angesehen werden können.

Beispielsweise kann ein Filter implementiert werden, durch den das Verfahren nur in solchen Bereichen einschaltet wird, in denen als gesichert angenommen werden kann, dass sich das Fahrzeug tatsächlich entlang der Vorzugslinie bewegt. In solchen Bereichen erfasste Trajektorienabschnitt können dann zur Referenzierung und für den Vergleich mit der Vorzuglinie genutzt werden.

Erfindungsgemäß wird der verwertbare Bereich anhand einer Abweichungsintention für das Fahrzeug bestimmt. Insbesondere wird dabei eine Intention zur Durchführung eines Fahrmanövers wie Spurwechsel, Überholen oder Ausweichen erfasst oder die Beendigung eines solchen Fahrmanövers detektiert. Dadurch kann der verwertbare Bereich vorteilhafterweise besonders zuverlässig bestimmt werden.

Alternativ oder zusätzlich wird erfindungsgemäß der verwertbare Bereich anhand eines Verlaufs des Verkehrswegs bestimmt, etwa anhand der Position einer Kurve. Dadurch können vorteilhafterweise Ereignisse und Fahrmanöver besonders zuverlässig vorhergesagt werden, bei denen mit einer Abweichung von der Vorzugslinie zu rechnen ist. Dies ist zum Beispiel der Fall bei Kurven, an Kreuzungen, bei Baustellen, Kreisverkehren, Ausfahrten oder Positionen, bei denen parkenden Fahrzeugen ausgewichen werden muss.

Bei einer Ausbildung wird der verwertbare Bereich anhand eines Maschinenlernverfahrens bestimmt. Hierdurch kann die Bestimmung der verwertbaren Bereiche vorteilhafterweise besonders zuverlässig durchgeführt werden.

Das Maschinenlernverfahren kann auf an sich bekannte Weise durchgeführt werden. Insbesondere erfolgt dabei ein Training anhand von in der Vergangenheit erfassten Daten, bei denen zum Beispiel Abweichungen von der Vorzugslinie in Abhängigkeit von bestimmten Eigenschaften des Verkehrswegs oder anderen Gegebenheiten detektiert wurden.

Beispielsweise kann auf diese Weise gelernt werden, in welchen Positionen ein Ausweichen gegenüber am Fahrbahnrand geparkten Fahrzeugen erforderlich ist, was zu einer Abweichung von der Vorzugslinie führt. Zudem kann der Einfluss der Witterung auf Abweichungen bestimmt werden.

Bei einer weiteren Ausbildung wird eine Messgenauigkeit für das Erfassen des Trajektorienabschnitts bestimmt und die Länge des erfassten Trajektorienabschnitts wird anhand der Messgenauigkeit bestimmt. Dadurch kann der Trajektorienabschnitt vorteilhafterweise so erfasst werden, dass die Messungen statistisch signifikante Aussagen über die Fahrt des Fahrzeuges erlauben.

Die Messungenauigkeit kann beispielsweise anhand einer Standardabweichung oder eines anderen Maßes für die Unsicherheit einer Positionsmessung bestimmt werden. Eine Einrichtung, die zum Erfassen der Trajektorienabschnitt genutzt wird, kann auch die hierzu notwendigen Daten bereitstellen. Beispielsweise kann ein Empfänger für ein globales Navigationssatellitensystem Informationen darüber bereitstellen, wie viele Navigationssatelliten aktuell sichtbar sind, wie gut ihr Signal empfangen wird und welche Auswirkungen dies auf die Genauigkeit der Erfassung des Trajektorienabschnitts hat.

Insbesondere wird ein umso längerer Trajektorienabschnitt erfasst, je größer die mit der Erfassung verbundene Unsicherheit ist. Umgekehrt kann bei einer geringeren Messungenauigkeit ein kürzerer Trajektorienabschnitt erfasst und für das Verfahren verwendet werden.

Bei einer Weiterbildung wird eine Änderung der Messunsicherheit für das Erfassen einer initialen Trajektorie erfasst und in Abhängigkeit von der Änderung wird die Erfassung des Trajektorienabschnitts initiiert oder beendet. Hierdurch kann vorteilhafterweise detektiert werden, wann sich die Bedingungen der Erfassung des Trajektorienabschnitts und gegebenenfalls die Art des dadurch verursachten Messfehler verändern.

Bei einer Änderung der Messunsicherheit kann festgestellt werden, dass eine gemessene Position oder Trajektorie mit einer größeren oder kleineren statistischen Unsicherheit behaftet ist. Ferner kann die Änderung der Messunsicherheit dazu führen, dass sich der systematische Versatz zwischen der gemessenen und tatsächlichen Trajektorie ändert. Insbesondere kann eine solche Änderung daher festgestellt werden, wenn sich die Abweichung der erfassten Positionen von der tatsächlichen Position sprunghaft verändert und daher ein anderer Ortungsversatz zur Korrektur verwendet werden muss. Zu solchen Änderungen kann es beispielsweise kommen, wenn sich zu einem Zeitpunkt die Anzahl der sichtbaren Navigationssatelliten verändert.

Die Änderung der Messunsicherheit kann auf unterschiedliche Weisen erfasst werden, beispielsweise anhand von Daten, die durch eine Einheit zur Erfassung des Trajektorienabschnitts bereitgestellt werden. Ferner kann bei einem erfassten Trajektorienabschnitt geprüft werden, ob plötzliche Position Veränderungen auftreten, insbesondere wenn diese in einem physikalischen Modell als unplausibel erkannt werden. Beispielsweise kann detektiert werden, wenn eine plötzliche Positionsänderung des Fahrzeugs gemessen wird, obwohl sich dieses nicht oder mit einer geringeren Geschwindigkeit bewegt oder wenn die Richtung der Positionsänderung nicht mit der sonstigen Bewegung des Fahrzeugs übereinstimmt. Insbesondere wird hierzu Odometrie verwendet, um die tatsächliche Bewegung des Fahrzeugs zu erfassen, oder es wird eine Plausibilität der erfassten Positionsänderung in Abhängigkeit von dem Fahrzeugtyp bestimmt.

Beispielsweise kann die zeitliche Ableitung der erfassten Fahrzeugbewegung entlang des Trajektorienabschnitts bestimmt werden. Wenn ein bestimmter Schwellenwert für die Positionsänderung in Abhängigkeit von der Zeit überschritten wird, kann dies als "Sprung" interpretiert und als Hinweis auf einen neu zu bestimmenden Ortungsversatz gewertet werden. Bei der Erfassung des Trajektorienabschnitts kann ein *Reset* durchgeführt werden, insbesondere bei einem *Sliding-Window-Verfahren,* sodass mit dem Erfassen des Trajektorienabschnitts neu begonnen wird.

Bei einer weiteren Ausbildung des Verfahrens kann anhand des bestimmten Ortungsversatzes eine mangelhafte Kalibration einer Einheit zur Erfassung des Trajektorienabschnitts bestimmt und/oder charakterisiert werden. Solche Kalibrationsmängel führen typischerweise zu systematischen Fehlern bei der Erfassung des Trajektorienabschnitts, die durch das erfindungsgemäße Verfahren erkannt werden können. Ferner kann die Art des Ortungsversatzes oder eine Eigenschaft davon Rückschlüsse darauf zulassen, welche Komponente falsch kalibriert ist oder in welcher Weise die Kalibration korrigiert werden muss. Es kann vorgesehen sein, eine fehlerhafte Kalibration anhand des bestimmten Ortungsversatzes zu korrigieren oder Fehlerdaten auszugeben, anhand derer beispielsweise eine Korrektur der Kalibration durchgeführt werden kann.

Bei einer weiteren Ausbildung wird die Bestimmung des Ortungsversatzes durch eine externe Einheit ausgeführt, beispielsweise durch einen externen Server. Die Rechenkapazitäten des Fahrzeugs können dadurch vorteilhafterweise sparsam eingesetzt werden. Die externe Einheit ist datentechnisch mit dem Fahrzeug verbunden und empfängt den erfassten Trajektorienabschnitt. Ferner können Kartendaten von dem Fahrzeug an die externe Einheit übertragen werden oder diese kann umgekehrt Kartendaten für das Fahrzeug bereitstellen. Die externe Einheit kann nun den Ortungsversatz bestimmen und gegebenenfalls an das Fahrzeug übertragen.

Bei einer weiteren Ausbildung umfasst der Ortungsversatz alternativ oder zusätzlich eine Korrektur der Ausrichtung des Fahrzeugs. Die Korrektur kann daher nicht nur auf die von dem fahrzeuggefahrene Trajektorie oder seine Position, sondern auch seine Ausrichtung im Raum angewandt werden. Die Kombination von Position und Ausrichtung wird typischerweise als "Pose" bezeichnet und häufig gemeinsam bestimmt. Die auch hier womöglich auftretenden systematischen Fehler, insbesondere über bestimmte Zeiträume hinweg, können ebenfalls mit dem erfindungsgemäßen Verfahren korrigiert werden. Dabei wird insbesondere berücksichtigt, dass die Ausrichtung des Fahrzeugs typischerweise mit einer Bewegungsausrichtung korreliert, das heißt, das Fahrzeug ist während einer Geradeausbewegung in Richtung der Bewegung ausgerichtet.

Bei der erfindungsgemäßen Positionsbestimmungssystem der eingangs genannten Art ist die Recheneinheit dazu eingerichtet, anhand eines Vergleichs des erfassten Trajektorienabschnitts und der Vorzugslinie einen Ortungsversatz zu bestimmen, anhand des Ortungsversatzes und des erfassten Trajektorienabschnitts einen korrigierten Trajektorienabschnitt zu bestimmen und den Ortungsversatz so zu bestimmen, dass eine Abweichung zwischen der Vorzugslinie und dem korrigierten Trajektorienabschnitt optimiert wird.

Die erfindungsgemäße Vorrichtung ist insbesondere ausgebildet, das vorstehend beschriebene erfindungsgemäße Verfahren zu implementieren. Die Vorrichtung weist somit dieselben Vorteile auf wie das erfindungsgemäße Verfahren.

Erfindungsgemäß umfasst das Positionsbestimmungssystem eine mit der Recheneinheit gekoppelte Erfassungseinheit zum Erfassen von Umgebungsdaten in einer Umgebung des Fahrzeugs. Dabei ist die Recheneinheit ferner dazu eingerichtet, anhand der erfassten Umgebungsdaten einen verwertbaren Bereich des Trajektorienabschnitts zu bestimmen, anhand dessen der Vergleich mit der Vorzugslinie ausgeführt wird, wobei der verwertbare Bereich anhand einer Abweichungsintention für das Fahrzeug oder eines Verlaufs des Verkehrswegs bestimmt wird.

Hierdurch wird vorteilhafterweise der Ortungsversatz besonders zuverlässig bestimmt, da beispielsweise nicht verwertbare Bereiche, in denen die tatsächliche Position des Fahrzeugs deutlich von Vorzugslinie abweicht, von der Auswertung ausgeschlossen werden können.

Die Erfindung wird nun anhand von Ausführungsbeispielen mit Bezug zu den Zeichnungen erläutert.
- Figur 1: zeigt ein Fahrzeug mit einem Ausführungsbeispiel des erfindungsgemäßen Positionsbestimmungssystems,
- Figur 2: zeigt das Fahrzeug bei einer Fahrt entlang eines Verkehrswegs und
- Figur 3: zeigt ein Ausführungsbeispiel des erfindungsgemäßen Verfahrens.

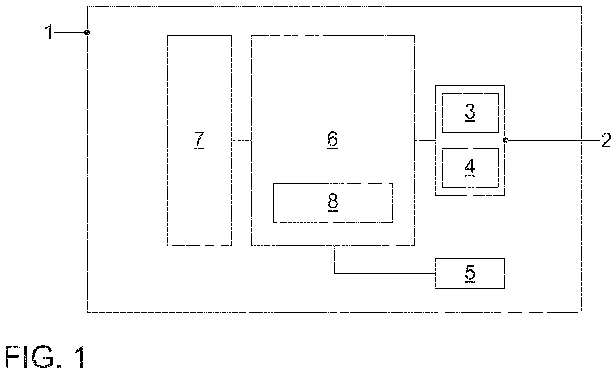

Mit Bezug zu Figur 1 wird ein Ausführungsbeispiel des erfindungsgemäßen Positionsbestimmungssystems erläutert.

Das Fahrzeug 1 umfasst eine Positionsbestimmungseinheit 5, die bei dem Ausführungsbeispiel auf einem globale Navigationssatellitensystem basiert, insbesondere dem Globalen Positionierungssystem GPS. Es umfasst ferner eine Erfassungseinheit 2, die bei dem Ausführungsbeispiel eine Kamera 3 und eine Vorverarbeitungseinheit 4 umfasst. Bei anderen Ausführungsbeispielen kann die Erfassungseinheit 2 alternativ oder zusätzlich beliebige Sensoreinrichtungen umfassen, etwa LIDAR- oder RADAR-Scanner, Time-of-flight-Kameras, Stereokameras, Infrarotkamera, Ultraschall- oder andere Sensoren.

Das Fahrzeug 1 umfasst ferner eine Recheneinheit 6, die eine Navigationseinheit 8 umfasst und mit der Erfassungseinheit 2, der Positionsbestimmungseinheit 5 und einem Fahrerassistenzsystem 7 gekoppelt ist.

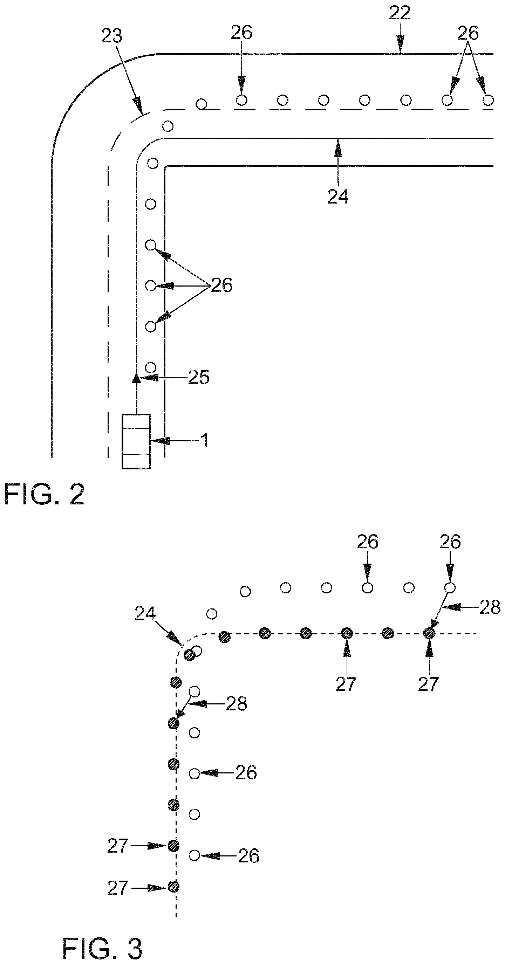

Mit Bezug zu den Figuren 2 und 3 wird ein Ausführungsbeispiel des erfindungsgemäßen Verfahrens erläutert. Dabei wird von dem oben erläuterten Ausführungsbeispiel des erfindungsgemäßen Positionsbestimmungssystems ausgegangen.

Das Fahrzeug 1 fährt auf einem Verkehrsweg 22 in die durch den Pfeil 25 angedeutete Richtung. Auf dem Verkehrsweg 22 sind zwei Fahrstreifen ausgebildet, die durch die durchgezogenen eingezeichneten seitlichen Begrenzungen des Verkehrswegs 22 sowie einen gestrichelten Mittelstreifen 23 definiert sind. Das Fahrzeug 1 befindet sich dabei auf dem in Fahrtrichtung 25 rechten Fahrstreifen. Ferner ist eine Vorzugslinie 24 eingezeichnet, die bei dem Ausführungsbeispiel im Wesentlichen mittig entlang des Fahrstreifens des Fahrzeugs 1 verläuft.

Bei dem Ausführungsbeispiel wird davon ausgegangen, dass das Fahrzeug 1 entlang einer tatsächlichen Trajektorie gesteuert wird, die im Wesentlichen mittig auf dem Verkehrsweg 22 verläuft und daher der Vorzugslinie 24 weitgehend entspricht. Die tatsächlich gefahrene Trajektorie des Fahrzeugs 1 unterscheidet sich daher bei dem Ausführungsbeispiel durch nur geringe statistische Abweichungen in seitliche Richtung von der Vorzugslinie 24.

Bei dem Verfahren werden im Fahrzeug 1 durch die Navigationseinheit 8 Kartendaten bereitgestellt, sie fungiert also als Kartendaten-Bereitstellungseinheit 8, die Informationen über den Verlauf des Verkehrswegs 22, seine Aufteilung in die Fahrstreifen, den Verlauf der Mittellinie 23 sowie den Verlauf der Vorzuglinie 24 umfassen.

Bei weiteren Ausführungsbeispielen kann vorgesehen sein, dass alternativ oder zusätzlich von einer externen Einheit Kartendaten bereitgestellt werden, die diese Informationen ergänzen oder alternativ bereitstellen. Die Erfassung von der externen Einheit erfolgt dabei über eine datentechnische Verbindung, etwa anhand einer Anfrage des Fahrzeugs oder durch automatische Übertragung relevanter Kartendaten an das Fahrzeug 1. Insbesondere wird ein an sich bekanntes *"Streaming"* der für das Fahrzeug 1 relevanten Kartendaten durchgeführt, insbesondere über das Internet.

Während einer Fahrt des Fahrzeugs 1 entlang des Verkehrswegs 22 - in Figur 2 und Figur 3 entspricht die tatsächliche Trajektorie im Wesentlichen der Vorzugslinie 24 und ist daher nicht gesondert gezeigt - wird durch die Positionsbestimmungseinheit 5 des Fahrzeugs 1 in regelmäßigen Abständen die geographische Position 26 des Fahrzeugs 1 bestimmt und an die Recheneinheit 6 übertragen. Die Bestimmung erfolgt bei dem Ausführungsbeispiel mittels GPS in globalen Koordinaten. Bei weiteren Ausführungsbeispielen kann alternativ oder zusätzlich eine andere Positionsbestimmung durchgeführt werden, beispielsweise mittels einer landmarkenbasierten Ortung, und die Position kann auch in einem relativen Koordinatensystem bestimmt werden.

Wie in den Figuren 2 und 3 sichtbar, folgen die erfassten Positionen 26 des Fahrzeugs 1 nicht der tatsächlich gefahrenen Trajektorie des Fahrzeugs 1 beziehungsweise der Vorzugslinie 24, sondern sie sind relativ dazu versetzt. Ferner weisen die erfassten Positionen 26 eine statistische Streuung auf, die berücksichtigt, dass die tatsächliche Trajektorie des Fahrzeugs 1 der Vorzuglinie 24 nicht exakt entspricht, anders als dies beispielsweise für ein Schienenfahrzeug zu erwarten wäre. Bei der tatsächlichen Trajektorie sind jedoch die Abweichungen von der Vorzugslinie 24 so ausgebildet, dass sie verglichen mit der Länge des gesamten dargestellten Trajektorienabschnitts nur kurzfristig auftreten.

Die Recheneinheit 6 bestimmt anhand der erfassten Positionen 26 einen Trajektorienabschnitt, der bei dem Ausführungsbeispiel sämtliche dargestellten Positionen 26 umfasst. Die Länge des Trajektorienabschnitts ist bei dem Ausführungsbeispiel definiert als Menge der Positionsmessungen, die innerhalb eines bestimmten Zeitintervalls, hier 30 s erfasst werden. In weiteren Ausführungsbeispielen kann ein anderes Zeitintervall vorgesehen sein, beispielsweise 1 min, oder die Länge des Trajektorienabschnitts kann anhand seiner räumlichen Länge definiert sein und beispielsweise einen Fahrweg von 200 m oder 400 m umfassen.

Die Erfassung des Trajektorienabschnitts erfolgt mittels eines "*Sliding Window",* bei dem sich der erfasste Trajektorienabschnitt mit dem Ablauf der Zeit und der fortlaufenden Bewegung des Fahrzeugs 1 ständig verschiebt. Die zeitliche und/oder räumliche Definition der Länge des Trajektorienabschnitts kann als "Breite" des *Sliding Window* bezeichnet werden. Diese Breite ist dynamisch ausgebildet in Abhängigkeit von einer Fahrsituation, wie in den unabhängigen Ansprüchen definiert, und weiterhin möglicherweise abhängig von einer Geschwindigkeit, einer durch die Positionsbestimmungseinheit 5 bereitgestellten Messungenauigkeit oder einer Eingabe durch einen Nutzer.

Die Recheneinheit 6 bestimmt einen Ortungsversatz 28 für den erfassten Trajektorienabschnitt, indem sie einen Abschnitt der Vorzuglinie 24 bestimmt, der dem erfassten Trajektorienabschnitt entspricht. Dies ist bei dem dargestellten Ausführungsbeispiel im Wesentlichen die gesamte gezeigte Vorzugslinie 24. Hier wird also von der Annahme ausgegangen, dass die tatsächlich gefahrene Trajektorie des Fahrzeugs 1 auf dem Verkehrsweg 22 durch die Vorzugslinie 24 gut angenähert werden kann. Zum bestimmendes relevanten Abschnitts der Vorzugslinie 24 wird bei dem Ausführungsbeispiel auch anhand der Erfassungseinheit 2 bestimmt, auf welchem Fahrstreifen des Verkehrsweges 22 sich das Fahrzeug 1 befindet.

Anschließend wird ein Vergleich durchgeführt, bei dem die Recheneinheit 6 Abweichungen der erfassten Positionen 26 gegenüber der Vorzugslinie 24 beziehungsweise dem bestimmten Vorzuglinienabschnitt bestimmt. Dies ist bei dem Ausführungsbeispiel der geometrische Abstand der erfassten Positionen 26 zum jeweils nächstliegenden Punkt Vorzugslinie 24; bei weiteren Ausführungsbeispielen können jedoch andere Maße verwendet werden. Es wird eine Optimierung durchgeführt, bei der die Abstände der erfassten Positionen 26 zu der Vorzuglinie 24 minimiert wird. Bei dieser Optimierung wird ein Ortungsversatz 28 bestimmt, der einem Bias-Vektor 28 entspricht und eine räumliche Verschiebung der erfassten Positionen 26 so beschreibt, dass diese optimal im Sinne einer möglichst minimalen Abweichung von der Vorzuglinie verschoben werden.

Bei weiteren Ausführungsbeispielen kann für den erfassten Trajektorienabschnitt ein statistisches Verfahren verwendet werden, um beispielsweise eine Glättung oder Mittelung durchzuführen und kurzfristige Abweichungen von der geglätteten Trajektorie auszugleichen; hierdurch kann die Durchführung des Vergleichs erleichtert werden, da niedrigfrequente Abweichungen nicht mehr berücksichtigt werden müssen.

Anhand des so bestimmten Ortungsversatzes 28 korrigiert die Recheneinheit 6 die erfassten Positionen 26 des Trajektorienabschnitts, um zu korrigierten Positionen 27 zu gelangen. In Figur 3 ist die Verschiebung der erfassten Positionen 26 um den Ortungsversatz 28 hin zu den korrigierten Positionen 27 gezeigt. Die korrigierten Positionen 27 folgen der Vorzugschiene 24 wesentlich besser als die erfassten Positionen 26, das heißt, es wird ein einzelner Ortungsversatz 28 zur Korrektur aller erfassten Positionen 26 des erfassten Trajektorienabschnitts bestimmt.

Bei einem weiteren Ausführungsbeispiel kann ferner eine Rotation um einen bestimmten Winkel gemäß der gleichen Optimierungsaufgabe bestimmt werden. Dies erlaubt eine Korrektur nicht nur für eine translatorische Korrektur der erfassten Positionen 26 gegenüber den korrigierten Positionen 27, sondern auch eine rotatorische Korrektur.

Bei dem in Figur 3 dargestellten Fall ist erkennbar, dass die korrigierten Positionen 27 im Bereich der Kurve der Vorzugslinie 24 deutlich von dieser abweichen. Dies kann etwa auftreten, wenn das Fahrzeug 1 die Kurve "schneidet" und daher nicht die Vorzugslinie 24 befährt. Wenn ein solches Ereignis lediglich kurze Dauer hat, sodass nur wenige erfasste Positionen 26 erfasst werden, während das Fahrzeug 1 von der Vorzuglinie 24 abweicht, kommt es lediglich zu geringen Auswirkungen auf die Bestimmung des Ortungsversatzes 28. Die erfassten Positionen 26 werden daher bei dem Ausführungsbeispiel nicht gefiltert, um diese Position auszuschließen.

Bei länger andauernden Ereignissen oder bei stärkeren Abweichungen ist jedoch vorgesehen, dass die Recheneinheit 6 Daten bei einer tatsächlichen Abweichung der vom Fahrzeug 1 befahrenen Trajektorie von der Vorzuglinie 24 aus den erfassten Daten filtert. Zum Beispiel erkennt die Recheneinheit 6 anhand von Daten der Erfassungseinheit 2 Situationen, bei denen von der Vorzuglinie 24 abgewichen wird, etwa das Schneiden einer Kurve, einen Spurwechsel, ein Ausweichen oder ein Überholmanöver. Die in diesem Bereich erfassten Positionen 26 werden dann von der Bestimmung des Ortungsversatzes 28 ausgeschlossen.

In solchen Fällen bestimmt die Recheneinheit 6 einen verwertbaren Bereich des erfassten Trajektorienabschnitts, wobei auch dieser verwertbare Bereich die Bedingungen an eine bestimmte Länge des für das Verfahren nutzbaren Trajektorienabschnitts erfüllen muss. Es werden diejenigen erfassten Positionen 26 verworfen, die in nicht verwertbaren Bereichen erfasst wurden, beispielsweise im Bereich einer Kurve. Ferner wird anhand von Daten der Erfassungseinheit 2 erkannt, wenn eine Intention des Fahrers des Fahrzeugs 1 zum Abweichen von der Vorzugslinie 24 vorliegt, etwa wenn ein Blinker betätigt oder eine rasche Richtungsänderung vorgenommen wird. Zudem können Informationen über Abweichungen von der Vorzugslinie 24 oder eine entsprechende Intention des Fahrers von dem Fahrerassistenzsystem 27 erfasst werden, etwa einem Überholassistenten.

Bei weiteren Ausführungsbeispielen kann ein Maschinenlernverfahren verwendet werden, um nicht verwertbare von verwertbaren Bereichen des erfassten Trajektorienabschnitts zu unterscheiden. Dabei wird das System auf an sich bekannte Weise anhand historischer Daten trainiert und es können Bereiche automatisch erkannt werden, in denen eine Abweichung von der Vorzuglinie 24 zu erwarten ist. Solche Bereiche können beispielsweise am Rand des Verkehrswegs 22 geparkte Fahrzeuge oder bestimmte Einrichtungen zur Regelung des Verkehrs aufweisen, die ein Ausweichen erforderlich machen.

Ferner wird, wenn ein Wechsel des Fahrstreifens oder ein anderweitiger Wechsel der Vorzugslinie 24 erkannt wird, bei der Optimierung des Ortungsversatzes 28 für verschiedene Teilmengen der erfassten Positionen 26 ihre Abweichung von unterschiedlichen Vorzugslinien 24 bestimmt.

Bei einem weiteren Ausführungsbeispiel wird ferner die Erfassungseinheit 2 des Fahrzeugs 1 genutzt, um die Position des Fahrzeugs 1 auf dem Verkehrsweg 22, insbesondere in lateraler Richtung, zu bestimmen und beim Bestimmen der Abweichung der gemessenen Positionen 26 von der Vorzuglinie 24 zu berücksichtigen, wo im Verhältnis zur Vorzugslinie 24 sich das Fahrzeug 1 tatsächlich befindet. Auf diese Weise kann der Ortungsversatz 28 genauer bestimmt werden, da nun die Abweichung von der tatsächlichen Position bestimmt werden kann, ohne die Annahme akzeptieren zu müssen, dass die Position des Fahrzeugs 1 auf der Vorzugslinie 24 liegt.

Bei dem Ausführungsbeispiel ist zudem vorgesehen, dass die Erfassung eines Trajektorienabschnitts mit dem *Sliding Window* unterbrochen werden kann, wenn eine Änderung des Ortungsversatzes 28 erfasst wird. Eine solche Änderung wird anhand von Daten der Positionsbestimmungseinheit 5 erfasst, die beispielsweise eine Änderung der Messunsicherheit ausgibt. Die Änderung wird außerdem dann erfasst, wenn der erfasste Trajektorienabschnitt eine plötzliche Positionsänderung aufweist, die von dem System als nicht plausibel erkannt wird. Beispielsweise kann eine sprunghafte Positionsänderung erfasst werden, wenn sich die Bedingungen für die Erfassung der Fahrzeugposition verändern. Die Positionsänderung kann darauf geprüft werden, ob sie physikalisch möglich scheint und/oder ob sie konsistent mit Odometriedaten oder anderen Daten des Fahrzeugs 1 ist. Ist dies nicht der Fall, liegt eine Bedingung vor, bei welcher der Trajektorienabschnitt vollständig neu erfasst wird. Es handelt sich daher um einen *"Reset"* bei der Erfassung des Trajektorienabschnitts mit der *Sliding-Window*-Methode und der Trajektorienabschnitts wird wieder vollständig neu erfasst.

### Bezugszeichenliste

- 1: Fahrzeug
- 2: Erfassungseinheit
- 3: Kamera
- 4: Vorverarbeitungseinheit
- 5: Positionsbestimmungseinheit
- 6: Recheneinheit
- 7: Fahrerassistenzsystem
- 8: Kartendaten-Bereitstellungseinheit, Navigationseinheit
- 22: Verkehrsweg, Straße
- 23: Mittelstreifen
- 24: Vorzugslinie
- 25: Pfeil, Richtung
- 26: erfasste Position
- 27: korrigierte Position
- 28: Ortungsversatz, Bias-Vektor

## Patentansprüche

1. Verfahren zum Bestimmen einer Trajektorie eines Fahrzeugs (1); bei dem
Kartendaten über einen Verkehrsweg (22) bereitgestellt werden, auf dem sich das Fahrzeug (1) bewegt, wobei die Kartendaten eine Vorzugslinie (24) zum Befahren des Verkehrswegs (22) umfassen; und
ein Trajektorienabschnitt des Fahrzeugs (1) erfasst wird;
anhand eines Vergleichs des erfassten Trajektorienabschnitts und der Vorzugslinie (24) ein Ortungsversatz (28) bestimmt wird; und
anhand des Ortungsversatzes (28) und des erfassten Trajektorienabschnitts ein korrigierter Trajektorienabschnitt bestimmt wird; wobei
der Ortungsversatz (28) so bestimmt wird, dass eine Abweichung zwischen der Vorzugslinie (24) und dem korrigierten Trajektorienabschnitt optimiert wird,
**dadurch gekennzeichnet, dass**
beim Erfassen des Trajektorienabschnitts ein verwertbarer Bereich des Trajektorienabschnitts bestimmt wird, anhand dessen der Vergleich mit der Vorzugslinie ausgeführt wird, wobei der verwertbare Bereich anhand einer Abweichungsintention für das Fahrzeug (1) oder eines Verlaufs des Verkehrswegs (22) bestimmt wird.

2. Verfahren gemäß Anspruch 1,
**dadurch gekennzeichnet, dass**
der erfasste Trajektorienabschnitt eine Vielzahl zeitlich aufeinanderfolgender Positionsmessungen umfasst.

3. Verfahren gemäß Anspruch 2,
**dadurch gekennzeichnet, dass**
der erfasste Trajektorienabschnitt Positionsmessungen während eines bestimmten Zeitintervalls, über einen bestimmten Fahrweg und/oder eine bestimmte Fahrweglänge aufweist.

4. Verfahren gemäß einem der vorhergehenden Ansprüche,
**dadurch gekennzeichnet, dass**
der Trajektorienabschnitt mittels eines Schiebefensteralgorithmus erfasst wird.

5. Verfahren gemäß einem der vorhergehenden Ansprüche,
**dadurch gekennzeichnet, dass**
beim Vergleichen des erfassten Trajektorienabschnitts und der Vorzugslinie (24) ein Vorzugslinienabschnitt bestimmt wird, welcher einem von dem Fahrzeug (1) befahrenen Abschnitt des Verkehrswegs (22) entspricht.

6. Verfahren gemäß Anspruch 5,
**dadurch gekennzeichnet, dass**
beim Bestimmen des Vorzugslinienabschnitts bestimmt wird, auf welchem Fahrstreifen des Verkehrswegs (22) sich das Fahrzeug (1) befindet.

7. Verfahren gemäß einem der vorhergehenden Ansprüche,
**dadurch gekennzeichnet, dass**
beim Erfassen des Trajektorienabschnitts eine laterale Position des Fahrzeugs (1) relativ zu dem Verkehrsweg (22) erfasst wird.

8. Verfahren gemäß einem der Ansprüche 1,
**dadurch gekennzeichnet, dass**
der verwertbare Bereich anhand eines Maschinenlernverfahrens bestimmt wird.

9. Verfahren gemäß einem der vorhergehenden Ansprüche,
**dadurch gekennzeichnet, dass**
eine Messgenauigkeit für das Erfassen des Trajektorienabschnitts bestimmt wird und die Länge des erfassten Trajektorienabschnitts anhand der Messgenauigkeit bestimmt wird.

10. Verfahren gemäß einem der vorhergehenden Ansprüche,
**dadurch gekennzeichnet, dass**
eine Änderung einer Messunsicherheit für das Erfassen einer initialen Trajektorie erfasst wird und in Abhängigkeit von der Änderung die Erfassung des Trajektorienabschnitts initiiert oder beendet wird.

11. Positionsbestimmungssystem zum Bestimmen einer Trajektorie eines Fahrzeugs (1), umfassend
eine Kartendaten-Bereitstellungseinheit (8) zum Bereitstellen von Kartendaten über einen Verkehrsweg (22), auf dem sich das Fahrzeug (1) bewegt, wobei die Kartendaten eine Vorzugslinie (24) zum Befahren des Verkehrswegs (22) umfassen;
eine Positionsbestimmungseinheit (5) zum Erfassen eines Trajektorienabschnitts des Fahrzeugs (1); und
eine mit der Positionsbestimmungseinheit (5) und der Kartendaten-Bereitstellungseinheit (8) gekoppelte Recheneinheit (6);
wobei die Recheneinheit (6) dazu eingerichtet ist:
anhand eines Vergleichs des erfassten Trajektorienabschnitts und der Vorzugslinie (24) einen Ortungsversatz (28) zu bestimmen;
anhand des Ortungsversatzes (28) und des erfassten Trajektorienabschnitts einen korrigierten Trajektorienabschnitt zu bestimmen; und
den Ortungsversatz (28) so zu bestimmen, dass eine Abweichung zwischen der Vorzugslinie (24) und dem korrigierten Trajektorienabschnitt optimiert wird, **gekennzeichnet durch**
eine mit der Recheneinheit (6) gekoppelte Erfassungseinheit (2) zum Erfassen von Umgebungsdaten in einer Umgebung des Fahrzeugs (1); wobei
die Recheneinheit (6) ferner dazu eingerichtet ist, anhand der erfassten Umgebungsdaten einen verwertbaren Bereich des Trajektorienabschnitts zu bestimmen, anhand dessen der Vergleich mit der Vorzugslinie ausgeführt wird, wobei der verwertbare Bereich anhand einer Abweichungsintention für das Fahrzeug (1) oder eines Verlaufs des Verkehrswegs (22) bestimmt wird.

## Claims

1. Method for determining a trajectory of a vehicle (1); in which
map data are provided which relate to a traffic route (22) on which the vehicle (1) moves, the map data comprising a preferential line (24) for driving along the traffic route (22); and in which
a trajectory portion of the vehicle (1) is detected;
a location offset (28) is determined on the basis of a comparison of the detected trajectory portion with the preferential line (24); and in which
a corrected trajectory portion is determined on the basis of the location offset (28) and the detected trajectory portion;
the location offset (28) being determined such that a deviation between the preferential line (24) and the corrected trajectory portion is optimized,
**characterized in that,**
when detecting the trajectory portion, a usable region of the trajectory portion is determined, on the basis of which the comparison with the preferential line is carried out, the usable region being determined on the basis of a deviation intention for the vehicle (1) or a course of the traffic route (22).

2. Method according to claim 1,
**characterized in that**
the detected trajectory portion comprises a plurality of temporally successive position measurements.

3. Method according to claim 2,
**characterized in that**
the detected trajectory portion has position measurements during a specific time interval, over a specific travel path and/or a specific travel path length.

4. Method according to any of the preceding claims,
**characterized in that**
the trajectory portion is detected by means of a sliding window algorithm.

5. Method according to any of the preceding claims,
**characterized in that,**
when comparing the detected trajectory portion with the preferential line (24), a preferential line portion is determined which corresponds to a portion of the traffic route (22) that is traveled along by the vehicle (1).

6. Method according to claim 5,
**characterized in that,**
when determining the preferential line portion, the lane of the traffic route (22) on which the vehicle (1) is located is determined.

7. Method according to any of the preceding claims,
**characterized in that,**
when detecting the trajectory portion, a lateral position of the vehicle (1) relative to the traffic route (22) is detected.

8. Method according to any of claims 1,
**characterized in that**
the usable region is determined on the basis of a machine learning method.

9. Method according to any of the preceding claims,
**characterized in that**
a measurement accuracy for detecting the trajectory portion is determined and the length of the detected trajectory portion is determined on the basis of the measurement accuracy.

10. Method according to any of the preceding claims,
**characterized in that**
a change in a measurement uncertainty for the detection of an initial trajectory is detected and the detection of the trajectory portion is initiated or terminated according to the change.

11. Position determination system for determining a trajectory of a vehicle (1), comprising
a map data provision unit (8) for providing map data which relate to a traffic route (22) on which the vehicle (1) moves, the map data comprising a preferential line (24) for driving along the traffic route (22);
a position determination unit (5) for detecting a trajectory portion of the vehicle (1); and
a computing unit (6) coupled to the position determination unit (5) and the map data provision unit (8);
the computing unit (6) being designed to:
determine a location offset (28) on the basis of a comparison of the detected trajectory portion with the preferential line (24);
determine a corrected trajectory portion on the basis of the location offset (28) and the detected trajectory portion; and
determine the location offset (28) such that a deviation between the preferential line (24) and the corrected trajectory portion is optimized,
**characterized by**
an acquisition unit (2) coupled to the computing unit (6) for acquiring surrounding area data in a surrounding area of the vehicle (1);
the computing unit (6) being further designed to determine, on the basis of the acquired surrounding area data, a usable region of the trajectory portion, on the basis of which the comparison with the preferential line is carried out, the usable region being determined on the basis of a deviation intention for the vehicle (1) or a course of the traffic route (22).

## Revendications

1. Procédé de détermination d'une trajectoire d'un véhicule (1), dans lequel
des données de carte sur une voie de circulation (22) sont mises à disposition, sur laquelle le véhicule (1) se déplace, dans lequel les données de carte comprennent une ligne préférentielle (24) pour emprunter la voie de circulation (22) ; et
un tronçon de trajectoire du véhicule (1) est détecté ;
à l'aide d'une comparaison du tronçon de trajectoire détecté et de la ligne préférentielle (24), un décalage de localisation (28) est déterminé ; et
à l'aide du décalage de localisation (28) et du tronçon de trajectoire détecté, un tronçon de trajectoire corrigé est déterminé ; dans lequel
le décalage de localisation (28) est déterminé de sorte qu'un écart entre la ligne préférentielle (24) et le tronçon de trajectoire corrigé est optimisé,
**caractérisé en ce que**
lors de la détection du tronçon de trajectoire, une zone exploitable du tronçon de trajectoire est déterminée, à l'aide de laquelle la comparaison avec la ligne préférentielle est réalisée, dans lequel la zone exploitable est déterminée à l'aide d'une intention d'écart pour le véhicule (1) ou d'un tracé de la voie de circulation (22).

2. Procédé selon la revendication 1,
**caractérisé en ce que**
le tronçon de trajectoire détecté comprend une pluralité de mesures de position successives dans le temps.

3. Procédé selon la revendication 2,
**caractérisé en ce que**
le tronçon de trajectoire détecté présente des mesures de position pendant un intervalle temporel déterminé, sur une voie de conduite déterminée et/ou une longueur de voie de conduite déterminée.

4. Procédé selon l'une des revendications précédentes,
**caractérisé en ce que**
le tronçon de trajectoire est détecté à l'aide d'un algorithme de fenêtre coulissante.

5. Procédé selon l'une des revendications précédentes,
**caractérisé en ce que**
lors de la comparaison du tronçon de trajectoire détecté et de la ligne préférentielle (24), un tronçon de ligne préférentielle est déterminé, qui correspond à un tronçon de la voie de circulation (22) emprunté par le véhicule (1).

6. Procédé selon la revendication 5,
**caractérisé en ce que**
lors de la détermination du tronçon de ligne préférentielle, il est déterminé sur quelle voie de la voie de circulation (22) se trouve le véhicule (1).

7. Procédé selon l'une des revendications précédentes,
**caractérisé en ce que**
lors de la détection du tronçon de trajectoire, une position latérale du véhicule (1) par rapport à la voie de circulation (22) est détectée.

8. Procédé selon l'une des revendications 1,
**caractérisé en ce que**
la zone exploitable est déterminée à l'aide d'un procédé d'apprentissage automatique.

9. Procédé selon l'une des revendications précédentes,
**caractérisé en ce que**
une précision de mesure pour la détection du tronçon de trajectoire est déterminée et la longueur du tronçon de trajectoire détecté est déterminée à l'aide de la précision de mesure.

10. Procédé selon l'une des revendications précédentes,
**caractérisé en ce que**
une modification d'une incertitude de mesure pour la détection d'une trajectoire initiale est détectée et, en fonction de la modification, la détection du tronçon de trajectoire est initiée ou terminée.

11. Système de détermination de position pour la détermination d'une trajectoire d'un véhicule (1), comprenant
une unité de mise à disposition de données de carte (8) pour la mise à disposition de données de carte sur une voie de circulation (22), sur laquelle le véhicule (1) se déplace, dans lequel les données de carte comprennent une ligne préférentielle (24) pour emprunter la voie de circulation (22) ;
une unité de détermination de position (5) pour la détection d'un tronçon de trajectoire du véhicule (1) ; et
une unité de calcul (6) couplée à l'unité de détermination de position (5) et à l'unité de mise à disposition de données de carte (8) ;
dans lequel l'unité de calcul (6) est conçue :
à l'aide d'une comparaison du tronçon de trajectoire détecté et de la ligne préférentielle (24), pour déterminer un décalage de localisation (28) ;
à l'aide du décalage de localisation (28) et du tronçon de trajectoire détecté, pour déterminer un tronçon de trajectoire corrigé ; et
pour déterminer le décalage de localisation (28) de sorte qu'un écart entre la ligne préférentielle (24) et le tronçon de trajectoire corrigé est optimisé,
**caractérisé par**
une unité de détection (2) couplée à l'unité de calcul (6) pour la détection de données d'environnement dans un environnement du véhicule (1) ; dans lequel
l'unité de calcul (6) est en outre conçue pour, à l'aide des données d'environnement détectées, déterminer une zone exploitable du tronçon de trajectoire, à l'aide de laquelle la comparaison avec la ligne préférentielle est réalisée, dans lequel la zone exploitable est déterminée à l'aide d'une intention d'écart pour le véhicule (1) ou d'un tracé de la voie de circulation (22).
